# EUROPÄISCHE PATENTSCHRIFT

(11) **EP 2 876 329 B1**
(45) Veröffentlichungstag und Bekanntmachung des Hinweises auf die Patenterteilung: **30.05.2018**
(21) Anmeldenummer: 14181721.3
(22) Anmeldetag: 21.08.2014
(51) Int. Cl.: F16G 1/28, B29D 29/00, F16G 5/20

(54) **Antriebsriemen mit einer Textilauflage und Verfahren zu dessen Herstellung**
Drive belt having a textile layer and method for producing the same
Courroie d'entraînement revêtue de textile et son procédé de fabrication

(30) Priorität: 11.11.2013 DE 102013222921
(43) Veröffentlichungstag der Anmeldung: 27.05.2015
(73) Patentinhaber: ContiTech Antriebssysteme GmbH, 30165 Hannover (DE)
(72) Erfinder: Teves, Reinhard, 30926 Seelze (DE); Schulte, Hermann, 30823 Garbsen (DE)
(74) Vertreter: Preusser, Andrea

(56) Entgegenhaltungen:
- EP-A1- 1 405 717
- EP-B1- 0 695 627
- WO-A1-2007/117690
- DE-A1-102012 206 040

## Beschreibung

Die Erfindung betrifft einen Antriebsriemen mit einem elastischen Grundkörper auf der Basis eines Vulkanisates, umfassend eine Decklage als Riemenrücken und einen Unterbau mit einer Kraftübertragungszone, wobei wenigstens der Riemenrücken mit einer Textilauflage versehen ist. Die Erfindung betrifft ferner drei Verfahren zur Herstellung eines derartigen Antriebsriemens.

Antriebsriemen, zum Beispiel DE102012206040, die auch als Kraftübertragungsriemen bezeichnet werden und im Funktionszustand endlos geschlossen sind, können als Flachriemen, Keilriemen, Keilrippenriemen, Zahnriemen und Kupplungsriemen ausgebildet sein.

Die Elastizität unter Einbezug der Biegeelastizität eines Antriebsriemens wird dadurch erreicht, dass der Grundkörper und somit die Decklage und der Unterbau aus einem polymeren Werkstoff mit elastischen Eigenschaften bestehen, wobei hier insbesondere Elastomere und thermoplastische Elastomere (TPE) zu nennen sind. Von besonderer Bedeutung sind Elastomere auf der Basis einer vulkanisierten Kautschukmischung.

Der elastische Grundkörper ist ferner zumeist noch mit einem eingebetteten Festigkeitsträger bzw. Zugträger versehen, der ein- oder mehrlagig ausgeführt sein kann. Die Antriebsriemen kommen unter anderem in einem Riemengetriebe, welches auch als Riementrieb, Hülltrieb oder Riemenantrieb bezeichnet wird, zum Einsatz.

Diese Riemengetriebe verfügen über zumindest eine Rückenrolle, über die der Antriebsriemen läuft. Für solche Triebe haben die Rückenrollen in der Regel verschiedenste Oberflächenbeschichtungen oder Oberflächenbehandlungen. Bekannt sind Rollen aus hochwertigen Stählen, die keiner weiteren Oberflächenbehandlung unterworfen werden aber auch Rollen, deren Oberflächen durch Phosphatierung oder Behandlung mit stickstoffhaltigen Verbindungen antikorrosiv ausgestattet sind.

Wird ein Riemen mit einer Rückenrolle betrieben so kann es auf den Rollen zu Ablagerungen kommen, die dann zu Schwingungen der Rolle und des Riemens führen. Dies führt zu unerwünschten Geräuschentwicklungen.

Die Bildung von Ablagerungen kann auf verschiedene Art und Weise vermindert werden: Die Rollen können auf Hochglanz poliert werden, so dass eine hohe Gleitfähigkeit der Oberfläche entsteht und sich keine Ablagerungen bilden. Nachteil hierbei sind die hohen Kosten eines solchen Polierens und die Gefahr von Korrosion an nicht phosphatierten Oberflächen. Eine weitere Möglichkeit zur Ablageverhinderung ist es, die Riemen ohne Textilauflage auf dem Rücken zu fertigen. Solche Riemen mit textilfrei geformten Rücken oder geschliffenen Rücken haben jedoch den großen Nachteil, dass sie weniger tieftemperaturflexibel sind und sehr empfindlich gegen Abrieb an den Riemenkanten.

Zur Optimierung des Geräuschverhaltens beschreibt bspw. EP0695627B1 das Behandeln von Riemen und Riementeilen mit Ölen aus perfluorierten Polyethern. Im Falle der Verschmutzung von Rollen zeigen sich aber große Nachteile. Abgesehen davon, dass derartige perfluorierte Öle sehr kostenintensiv sind, zeigen sie speziell bei der Rollenverschmutzung keine positiven Effekte. Es bilden sich immer noch Ablagerungen analog der nicht behandelten Riemen.

In DE 10029470C2 und EP04104744 wird das Gewebe auf dem Riemenrücken mit Resorzin- Formaldehyd-Latex behandelt bzw. Polyurethan in den Geweben eingesetzt. Es zeigt sich, dass solche Maßnahmen zusammen mit einer besonderen Webstruktur zu geringem Ablaufverhalten der Riemen führen. Gleichzeitig ist hierbei allerdings eine große Tendenz zur Verschmutzung der Rückenrollen zu beobachten.

EP94119642 und EP1088177 offenbaren Gewebebeschichtungen mit fluorhaltigen Polymeren bzw. die Präparation mit fluorhaltigen Partikeln in Polyurethan. Auch hier zeigt sich eine signifikante Verschmutzung der Rückenrollen.

WO 2011/054836A1 beschreibt die Behandlung von Riemenoberflächen mit PTFE - Suspensionen mit sehr kleinen Partikeln. Auch solche Präparationen führen zu signifikanten Verschmutzungen der Rückenrolle.

Somit besteht die Aufgabe der Erfindung darin, einen Antriebsriemen bereitzustellen der sich bei Einsatz im Riementrieb durch eine deutlich geringere Verschmutzung der Rollen auszeichnet. Hierdurch bleiben die Rückenrollen sauber und gleichzeitig entstehen keine Geräusche durch die Ablagerung auf den Rollen. Die Aufgabe wird gelöst durch ein Antriebsriemen gemäß Anspruch 1. Eine derartige Textilauflage führt zu einer deutlichen Reduzierung der Rollenverschmutzung und gleichzeitig zu einer weiteren Kostenreduzierung, da die Menge an Fluor bzw. an Fluorderivaten reduziert werden kann.

Die Textilauflage kann zusätzlich auf ihrer dem Riemenrücken zugewandten Seite mit einem Haftmittel versehen sein.

In einer bevorzugten Ausführungsform hat das Öl eine kinematische Viskosität zwischen 5 und 500 mm²/s bei 40°C.

Es handelt sich bei dem Öl bevorzugt um aromatenfreie Öle und Öle ohne Schadstoffe, da das Öl sich direkt an der Oberfläche befindet, die mit dem Verbraucher in Kontakt kommen könnte. Somit wird eine Gesundheitsgefährdung des Verbrauchers vermieden.

Das Öl ist fluorfrei, d.h. die Menge an Fluor bzw. Fluorderivaten beträgt 0 Gew. -%.

Die Textilauflage kann als Gewebe, Gewirke oder Gestrick ausgebildet sein, wobei es sich bevorzugt um ein Gewebe handelt.

Hinsichtlich vorteilhafter Vulkanisate auf der Basis von Kautschukmischungen wird im Rahmen der Figurenbeschreibung noch näher eingegangen.

Eine weitere Aufgabe der Erfindung besteht darin, ein Verfahren zur Herstellung eines Antriebsriemens bereitzustellen, bei denen die eingangs genannten Nachteile der Rollenverschmutzung reduziert. Die Aufgabe wird gelöst durch ein Verfahren gemäß Anspruch 5. Die Erfindung wird nun anhand von Ausführungsbeispieleen und unter Bezugnahme auf eine schematische Längsschnittsdarstellung beschrieben.

Verschiedene Versuche mit unterschiedlichen Mitteln zeigen, dass Behandlungen der Riemenrücken mit fluorfreien oder fluorarmen Ölen die beste Wirkung haben. Mit solchen Ölen behandelte Riemen zeigen keine sichtbaren Verschmutzungen der Rückenrollen. Für die unten stehenden Ausführungsbeispiele wurde ein handelsüblicher Motor mit Riemen verschiedener Präparation versehen. Bei den Versuchen 1 bis 4 handelt es sich um Vergleichsversuche, während die Versuche 5 bis 7 erfindungsgemäße Versuche zeigen.

### 1.) Serienriemen:

Zahngewebe: Polyamid mit gleitfähiger Präparation
Elastomermischung auf Basis HNBR - Kautschuk
Rückengewebe aus Polyamid mit RFL - Präparation
Keine Nachpräparation der fertigen Riemen
Ergebnis nach 1 Stunden Laufzeit auf einem Motor mit phosphatierten Rückenrollen:
   Ablagerungen: Massive Ablagerungen
   Haftung Rückengewebe am Riemen: Gut

### 2.) Riemen mit präpariertem Rücken

Zahngewebe: Polyamid mit gleitfähiger Präparation
Elastomermischung auf Basis HNBR - Kautschuk
Rückengewebe aus Polyamid mit RFL - Präparation
Nachbehandlung der Riemen mit einer Beschichtung auf Basis einer wässrigen Präparation von PTFE
Ergebnis nach 1 Stunden Laufzeit auf einem Motor mit phosphatierten Rückenrollen:
   Ablagerungen: geringere Ablagerungen
   Haftung Rückengewebe am Riemen: Gut

### 3.) Riemen mit präpariertem Rückengewebe

Zahngewebe: Polyamid mit gleitfähiger Präparation
Elastomermischung auf Basis HNBR - Kautschuk
Rückengewebe aus Polyamid mit RFL - Präparation und einer zusätzlichen Präparation mit einer Lösung aus einer Gummimischung auf Basis HNBR - Kautschuk
Keine Nachpräparation der fertigen Riemen
Ergebnis nach 1 Stunden Laufzeit auf einem Motor mit phosphatierten Rückenrollen:
   Ablagerungen: Massive Ablagerungen
   Haftung Rückengewebe am Riemen: Gut

### 4.) Riemen mit präpariertem Rückengewebe

Zahngewebe: Polyamid mit gleitfähiger Präparation
Elastomermischung auf Basis HNBR - Kautschuk
Rückengewebe aus Polyamid mit RFL - Präparation und einer zusätzlichen Präparation mit einer Lösung aus einer Gummimischung auf Basis HNBR - Kautschuk und anschließend einer Präparation von PTFE in Polyurethan Keine Nachpräparation der fertigen Riemen
Ergebnis nach 1 Stunden Laufzeit auf einem Motor mit phosphatierten Rückenrollen:
   Ablagerungen: größere Ablagerungen
   Haftung Rückengewebe am Riemen: Gut

### 5.) Riemen mit präpariertem Rückengewebe:

Zahngewebe: Polyamid mit gleitfähiger Präparation
Elastomermischung auf Basis HNBR - Kautschuk
Rückengewebe aus Polyamid mit RFL - Präparation und einer zusätzlichen Behandlung mit Mineralöl gem. CAS 8012-95-1 und einer kinematischen Viskosität von70 mm²/s bei 40°C
Keine Nachpräparation der fertigen Riemen
Ergebnis nach 1 Stunden Laufzeit auf einem Motor mit phosphatierten Rückenrollen:
   Ablagerungen: keine Ablagerungen
   Haftung Rückengewebe am Riemen: schlechter als beim Serienriemen

### 6.) Riemen mit präpariertem Rückengewebe:

Zahngewebe: Polyamid mit gleitfähiger Präparation
Elastomermischung auf Basis HNBR - Kautschuk
Rückengewebe aus Polyamid mit RFL - Präparation
Abwischen des fertigen Riemens mit verschiedenen Ölen
Ergebnis nach 1 Stunden Laufzeit auf einem Motor mit phosphatierten Rückenrollen:
   - Öl 1
      medizinisches Weissöl CAS 8012-95-1, kinemat. Viskosität 70mm²/s bei 40°C
      Ablagerungen: Frei von Ablagerungen
      Haftung Rückengewebe am Riemen: Gut
   -Öl 2
      Trimellitsäureester von Alkoholen C6 bis C10
      Ablagerungen: Frei von Ablagerungen
      Haftung Rückengewebe am Riemen: Gut
   - Öl 3
      Rapsöl
      Ablagerungen: Frei von Ablagerungen
      Haftung Rückengewebe am Riemen: Gut
   - Öl 4
      Polyethylenglykol (Molgewicht 400 g/mol)
      Ablagerungen: Frei von Ablagerungen
      Haftung Rückengewebe am Riemen: Gut
   - Öl 5
      technisches paraffin. Weichmacheröl, kinemat. Viskosität 110 mm²/s bei 40°C
      Ablagerungen: Frei von Ablagerungen
      Haftung Rückengewebe am Riemen: Gut

### 7.) Riemen mit präpariertem Rückengewebe:

Zahngewebe: Polyamid mit gleitfähiger Präparation
Elastomermischung auf Basis HNBR - Kautschuk
Rückengewebe aus Polyamid mit RFL - Präparation
Abwischen des vulkanisierten Riemenwickels mit verschiedenen Ölen Anschließend Schneiden des behandelten Wickels in einzelne Riemen Ergebnis nach 1 Stunden Laufzeit auf einem Motor mit phosphatierten Rückenrollen:
   - Öl 1
      medizinisches Weissöl CAS 8012-95-1, kinemat. Viskosität 70mm²/s bei 40°C
      Ablagerungen: Frei von Ablagerungen
      Haftung Rückengewebe am Riemen: Gut
   -Öl 2
      Trimellitsäureester von Alkoholen C6 bis C10
      Ablagerungen: Frei von Ablagerungen
      Haftung Rückengewebe am Riemen: Gut
   - Öl 3
      Rapsöl
      Ablagerungen: Frei von Ablagerungen
      Haftung Rückengewebe am Riemen: Gut

Im Rahmen der obigen Versuche hat es sich als vorteilhaft herausgestellt, wenn das Öl wenigstens 3 Stunden in die Textilauflage einwirken kann, da es dann zu besseren Schneidergebnissen beim Schneiden der einzelnen Riemen aus dem Riemenwickel kommt.

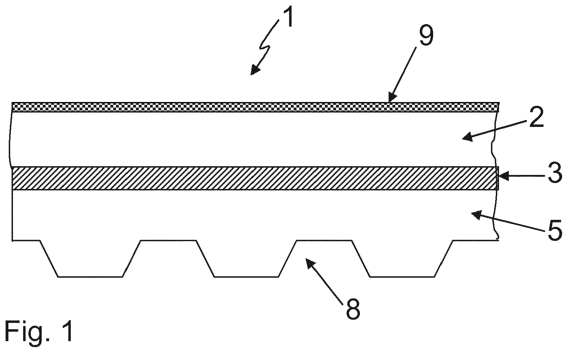

Die einzige Figur zeigt einen Antriebsriemen 1 in Form eines Zahnriemens mit einer Kraftübertragungszone 8, einer Decklage 2 als Riemenrücken, einer Festigkeitsträgerlage 3 mit in Längsrichtung verlaufenden parallel angeordneten Zugträgern 4 sowie mit einem Unterbau 5. Die Decklage 2 ist mit einer Textilauflage 9 ausgestattet, die wenigstens ein Öl enthält.

Die Decklage 2 und der Unterbau 5 bilden dabei als Gesamteinheit den elastischen Grundkörper auf der Basis eines thermoplastischen Elastomers oder auf der Basis eines Vulkanisates, insbesondere in Form einer vulkanisierten Kautschukmischung, enthaltend wenigstens eine Kautschukkomponente und Mischungsingredienzien. Als Kautschukkomponente wird insbesondere ein Ethylen-Propylen-Mischpolymerisat (EPM), ein Ethylen-Propylen-Dien-Mischpolymerisat (EPDM), (teil)hydrierter Nitrilkautschuk (HNBR), Chloropren-Kautschuk (CR),
Fluor-Kautschuk (FKM), Naturkautschuk (NR), Styrol-Butadien-Kautschuk (SBR) oder Butadien-Kautschuk (BR) eingesetzt, die unverschnitten oder mit wenigsten einer weiteren Kautschukkomponente, insbesondere mit einem der vorgenannten Kautschuktypen, verschnitten sind, beispielsweise in Form eines EPM/EPDM- oder SBR/BR-Verschnittes. Von besonderer Bedeutung ist dabei EPM oder EPDM oder ein EPM/EPDM-Verschnitt. Die Mischungsingredienzien umfassen dabei wenigstens einen Vernetzer oder ein Vernetzersystem (Vernetzungsmittel und Beschleuniger). Weitere Mischungsingredienzien sind zumeist noch ein Füllstoff und/oder ein Verarbeitungshilfsmittel und/oder ein Weichmacher und/oder ein Alterungsschutzmittel sowie gegebenenfalls weitere Zusatzstoffe, beispielsweise Fasern und Farbpigmente. Diesbezüglich wird auf den allgemeinen Stand der Kautschukmischungstechnologie verwiesen.

Die Zugträger 4 sind insbesondere Einzelcorde, beispielsweise aus Stahl, Polyamid, Aramid, Polyester, Glasfasern, Polyetheretherketon (PEEK) oder Polethylen-2,6-naphthalat (PEN).

### Bezugszeichenliste (Teil der Beschreibung)

- 1: Antriebsriemen (Zahnriemen)
- 2: Decklage als Riemenrücken
- 3: Festigkeitsträgerlage in Form von Zugsträngen
- 5: Unterbau
- 8: Kraftübertragungszone
- 9: Textilauflage der Decklage

## Patentansprüche

1. Antriebsriemen (1) mit einem elastischen Grundkörper auf der Basis eines Vulkanisates, umfassend eine Decklage (2) als Riemenrücken und einen Unterbau (5) mit einer Kraftübertragungszone (8), wobei der Riemenrücken einer Textilauflage (10) versehen ist, **dadurch gekennzeichnet, dass** die Textilauflage (10) mehr als 0,01 % bezogen auf das Riemengewicht wenigstens eines Öles enthält, wobei das Öl fluorfrei ist, so dass die Menge an Fluor und / oder Fluorderivate 0 Gew.-% beträgt, und wobei das Öl medizinisches Weissöl ist.

2. Antriebsriemen nach Anspruch 1, **dadurch gekennzeichnet, dass** das Öl eine kinematische Viskosität zwischen 5 und 500 mm²/s bei 40°C hat.

3. Antriebsriemen nach einem der Ansprüche 1 bis 3, **dadurch gekennzeichnet, dass** die Textilauflage (10) als Gewebe ausgebildet ist.

4. Riemengetriebe, **dadurch gekennzeichnet, dass** es wenigstens einen Antriebsriemen (1) gemäß einem der Ansprüche 1 bis 3 enthält.

5. Verfahren zur Herstellung eines Antriebsriemens (1) mit einem elastischen Grundkörper auf der Basis eines Vulkanisates, umfassend eine Decklage (2) als Riemenrücken und einen Unterbau (5) mit einer Kraftübertragungszone (8), wobei der Riemenrücken mit einer Textilauflage (10) versehen wird, **gekennzeichnet durch** wenigstens folgende Verfahrensschritte:
- Einsprühen oder Einreiben wenigstens der mit einer Textilauflage (10) versehenen Decklage (2) eines vulkanisierten Riemenwickels mit wenigstens einem Öl, welches fluorfrei ist, so dass die Menge an Fluor und / oder Fluorderivate 0 Gew. - % beträgt, und wobei das Öl medizinisches Weißöl ist;
- Ausschneiden des Antriebsriemens (1) aus dem vulkanisierten Riemenwickel.

## Claims

1. Drive belt (1) having an elastic main body based on vulcanized rubber, comprising a cover tier (2) as a belt backing, and a sub-structure (5) having a force transmission zone (8), wherein the belt backing of a textile layer (10) is provided, **characterized in that** the textile layer (10) in terms of at least one oil comprises more than 0.01% in relation to the belt weight, wherein the oil is free of fluorine, such that the quantity of fluorine and/or fluorine derivatives is 0% by weight, and wherein the oil is medicinal liquid paraffin.

2. Drive belt according to Claim 1, **characterized in that** the oil has a kinematic viscosity between 5 and 500 mm²/s at 40°C.

3. Drive belt according to one of Claims 1 to 3, **characterized in that** the textile layer (10) is configured as a woven fabric.

4. Belt drive, **characterized in that** said belt drive includes at least one drive belt (1) according to one of Claims 1 to 3.

5. Method for producing a drive belt (1) having an elastic main body based on vulcanized rubber, comprising a cover tier (2) as a belt backing, and a sub-structure (5) having a force-transmission zone (8), wherein the belt backing is provided with a textile layer (10), **characterized by** at least the following method steps:
- spraying or rubbing at least the cover tier (2), provided with a textile layer (10), of a vulcanized belt coil with at least one oil which is free of fluorine, such that the quantity of fluorine and/or fluorine derivatives is 0% by weight, and wherein the oil is medicinal liquid paraffin;
- cutting the drive belt (1) from the vulcanized belt coil.

## Revendications

1. Courroie d'entraînement (1), comprenant un corps de base élastique à base d'un vulcanisat, comprenant une couche de recouvrement (2) en tant que dos de courroie et une sous-structure (5) avec une zone de transfert de force (8), le dos de courroie d'un revêtement textile (10) étant pourvu, **caractérisée en ce que** le revêtement textile (10) contient plus de 0,01 %, par rapport au poids de la courroie, d'au moins une huile, l'huile étant exempte de fluor, de telle sorte que la quantité de fluor et/ou de dérivés du fluor soit de 0 % en poids et l'huile étant une huile blanche médicale.

2. Courroie d'entraînement selon la revendication 1, **caractérisée en ce que** l'huile présente une viscosité cinématique comprise entre 5 et 500 mm²/s à 40°C.

3. Courroie d'entraînement selon l'une quelconque des revendications 1 à 3, **caractérisée en ce que** le revêtement textile (10) est réalisé sous forme de tissu.

4. Transmission à courroie, **caractérisée en ce qu'**elle contient au moins une courroie d'entraînement (1) selon l'une quelconque des revendications 1 à 3.

5. Procédé de fabrication d'une courroie d'entraînement (1) comprenant un corps de base élastique à base d'un vulcanisat, comprenant une couche de recouvrement (2) en tant que dos de courroie et une sous-structure (5) avec une zone de transfert de force (8), le dos de courroie étant pourvu d'un revêtement textile (10), **caractérisé par** au moins les étapes de procédé suivantes :
- pulvérisation ou enduction d'au moins une huile exempte de fluor sur au moins la couche de recouvrement (2) pourvue d'un revêtement textile (10) d'un rouleau de courroie vulcanisé, de telle sorte que la quantité de fluor et/ou de dérivés du fluor soit de 0 % en poids et l'huile étant une huile blanche médicale ;
- découpage de la courroie d'entraînement (1) dans le rouleau de courroie vulcanisé.
